# EUROPEAN PATENT APPLICATION

(11) **EP 3 862 181 A1**
(43) Date of publication of application: **11.08.2021**
(21) Application number: 20155584.4
(22) Date of filing: 05.02.2020
(51) Int. Cl.: B32B 27/08, B32B 27/18, B32B 27/32

(54) **POLYETHYLENE FILM**

(71) Applicant: Trioplast Landskrona AB, 261 23 Landskrona (SE)
(72) Inventor: Broström, Stefan, 252 70 Råå (SE)
(74) Representative: AWA Sweden AB

(57) **Abstract**

A cast extrusion process is provided comprising i) providing a first composition A comprising 50-90 wt-% of linear low density polyethylene (LLDPE) and 0-25 wt-% of high density polyethylene (HDPE), a second composition B comprising 50-90 wt-% of LLDPE, 20-40 wt-% of low density polyethylene (LDPE), and 0-25 wt-% of HDPE, and optionally a third composition C, at least one of composition A and composition B comprising HDPE; ii) cast extruding the compositions to form a multilayer film wherein composition A forms a core layer arranged between a first outer layer and a second outer layer; iii) stretching said multilayer film using a machine-direction orientation unit; and vi) collecting said film. The compositions are essentially composed of polyethylene. A stretched cast multlayer film is also provided, as well as a laminate including the same. The film and the laminate are advantageously used as packaging material.

## Description

### Field of the invention

The present invention relates to polyethylene-containing multilayer films for packaging applications.

### Background

Plastic films are used for a wide variety of packaging applications. In many cases, packaging requires one or more functionalities of the materials used in term of e.g. stiffness, puncture resistance and other mechanical properties, sealing capability, transparency, printability, and impermeability to gases and/or liquids. To address these requirements, packages are often made from multiple layers to provide different functionalities. Multilayer structures can be provided by co-extrusion, or by lamination of two or more separate films. As an example, polyethylene films, which are useful for their mechanical properties, may be laminated to a layer of metal foil, or laminated or coextruded with a barrier layer of e.g. polyamide, which confers barrier properties. Moreover, polyethylene films may be printed, in which case a transparent film is laminated over the printed film surface to protect the print. The lamination film is usually made of polyester, such as polyethylene terephthalate (PET), or polypropylene to provide a highly transparent surface.

However, multilayer structures incorporating different base resins, even different polyolefins such as polyethylene and polypropylene, are difficult to recycle, to the detriment of sustainability. Accordingly, there is a need in the art for films and packaging materials which are more easily recycled compared to conventional multilayer films or laminates, while preferably also improving, or at least without compromising, the required functionality and processability of the products.

### Summary of the invention

It is an object of the present invention to at least partly overcome the problems in the prior art, and to provide a multilayer film suitable for use in packaging applications, which is easier to recycle.

According to a first aspect, this and other objects are achieved by a process for producing a polyethylene-based multilayer film, comprising:
i) providing a first extrudible composition A, a second extrudible composition B and optionally a third extrudible composition C, wherein: the first extrudible composition A comprises from 50 to 90 % by weight of linear low density polyethylene (LLDPE) and from 0 to 25 % by weight of high density polyethylene (HDPE); and the second extrudible composition B comprises from 50 to 90 % by weight of LLDPE, 20-40 % by weight of low density polyethylene (LDPE), and from 0 to 25 % by weight of HDPE; wherein at least one of said first extrudible composition A and said second extrudible composition B comprises HDPE; and wherein the extrudible compositions A and B, and if present C, are essentially composed of polyethylene;
ii) cast extruding the first extrudible composition, the second extrudible composition and optionally the third extrudible composition to form a multilayer cast film wherein said first extrudible composition forms a core layer 101 arranged between a first outer layer 102 formed by the second extrudible composition and a second outer layer 103 formed by either the second extrudible composition or the optional third extrudible composition C;
iii) stretching said multilayer cast film using a machine-direction orientation (MDO) unit; and
vi) collecting said film.

The present inventors surprisingly found that a cast extruded multilayer film och the claimed composition, when stretched in the MDO, results in a stretched film with properties excellent for certain packaging applications. In particular, the film may be transparent, exhibiting exceptional clarity and low haze, which makes it useful as such for packaging objects which are intended to be clearly visible through the packaging, as well as for lamination to a printed base films to form printed laminates for various types packaging. The multilayer film obtained by the present process may thus replace e.g. PET films used in printed laminates for packaging where lamination substrate is a polyethylene film. Thus, a monomaterial laminate, which is more easily recylced, can be provided.

As used herein, the term "monomaterial" means that the structures in question (e.g. a composition, a layer, a multilayer film or a laminate) is essentially composed of one base material, in particular one base polymer, in this case of polyethylene. In this context" essentially composed of" means at least 95 % by weight polyethylene, or at least 99 % by weight percent of polyethylene, at least 99.5 % by weight of polyethylene, or at least 99.9 % by weight of polyethylene, based on the overall weight of the structure. "Polyethylene" includes at least linear low density polyethylene (LLDPE), low density polyethylene (LDPE), medium density polyethylene (MDPE), and high density polyethylene (HDPE). The content of other polymers, such as other polyolefins (e.g. polypropylene), polyamide, and polyesters, is thus very low, such as less than 5 %, less than 1 % or less than 0.5 % by weight, and may be 0.0 %.

In embodiments, the first and second extrudible compositions, and where present also the third extrudible composition, may be free of filler materials, such as mineral fillers, and/or other particulate material. For example, multilayer film may be fee of mineral fillers such as calcium carbonate, or pigment particles such as titanium dioxide.

The multilayer film may be transparent. In particular, the film may exhibit high clarity, such as a clarity of at least 95 % as determined by ASTM D 1003. The film may exhibit a haze value of 5 % or less as determined by ASTM D 1003.

In the above process, the film may be stretched by 50-500 % of its original length, preferably by 50-300 %. Optionally, in step iii) the multilayer film may be heated prior to stretching.

As used herein, "stretched film" refers to a film that is stretched in the longitudinal direction during the film production process, before being collected (typically wound onto rolls). Stretching is thus typically performed in an MDO unit of the production line and involves passing the film between two or more stretching rollers rotating at different speeds. Typically, stretching is followed by relaxation of the film. The expression "degree of stretching", or "stretching degree" is intended to mean the difference in length, in percent, between the stretched film after manufacture (i.e. after stretching and following relaxation of the film) and the initial film length prior to stretching in the MDO. Hence, the degree of stretching thus refers to the increase in film length relative to the length of the film prior to stretching. The expression "stretch ratio", which is also sometimes usedin the art, typically refers to the ratio of the initial film length prior to stretching, and the total film length after stretching. Hence a degree of stretching of 50 % represents a stretch ratio of 1:1.5, and a degree of stretching of 300 % represents a stretch ratio of 1:4.

It may be noted that stretching operation, and the degree of stretching, affects various properties of the film, including mechanical properties. In the case of the present invention, the stretching was found to result in excellent optical properties.

In embodiments, the extrudible composition A may comprise from 10 to 20 % by weight of HDPE. The first extrudible composition may have a density in the range of from 925 to 940 kg/m³.

In embodiments, the extrudible composition B may comprise from 5 to 20 % by weight of HDPE.

In embodiments where a third extrudible composition C is provided, this composition may comprise from 50 to 90 % by weight of LLDPE, from 20 to 40 % by weight of LDPE and from 0 to 25 % by weight of HDPE. The third extrudible composition C may be the same as the second extrudible composition B. However, the compositions of extrudible compositions B and C may also differ.

In another aspect, the invention provide a multilayer polyethylene film having a machine direction stretching degree of from 50 % to 300 % and comprising a core layer arranged between a first outer layer and a second outer layer, the core layer comprising a polyethylene blend of from 50 to 90 % by weight of linear low density polyethylene (LLDPE) and from 0 to 25 % by weight of high density polyethylene (HDPE), the first outer layer comprising a blend of from 50 to 90 % by weight of LLDPE, from 20 to 40 % by weight of low density polyethylene (LDPE) and from 0 to 25 % of HDPE; and the second outer layer comprising a blend of from 50 to 90 % by weight of LLDPE, from 20 to 40 % by weight of LDPE and from 0 to 25 % of HDPE, wherein at least one of the core layer, the first outer layer and the second outer layer comprises HDPE, wherein the second outer layer optionally has the same composition as the first outer layer, and wherein the multilayer film is essentially composed of polyethylene.

In embodiments, the film may have a melt index in the range of from 2 to 3.5 g/10 min according to ASTM D1238 (2.16 kg, 190 °C).

In embodiments, at least one layer of the multilayer film, such as the core layer, may comprise a gas barrier additive, preferably at a content of 10-20 % by weight of said layer. The gas barrier additive may improve e.g. oxygen barrier properties.

In embodiments, at least one of the first outer layer and the second outer layer may comprise a slip agent, preferably at a content of 2-5 % by weight.

In another aspect, the invention provides a laminate comprising the multilayer polyethylene film described above, laminated to a first surface of a polyethylene base film. The laminate is thus be a monomaterial polyethylene laminate of improved recyclability.

In yet another aspect the invention provides a method of producing said laminate, comprising
a) providing a polyethylene base film haing a first surface and a second surface,
b) providing the multilayer polyethylene film as described herein, and
c) laminating said polyethylene multilayer film to said first surface of the polyethylene base film.

In embodiments, the first surface of the polyethylene base film may be printed, and step a) may optionally comprise: a-i) providing a polyethylene base film haing a first surface and a second surface, and a-ii) providing a printed pattern on said first surface of the polyethylene base film.

By laminating the multilayer polyethylene film to the thus printed base film, protecttion of the print is provided, while ensuring excellent visibility thereof, without the use of non-polyethylene materials such as PET which renders recycling of the laminate difficult.

Accordingly, the invention also provides a packaging material comprising the laminate as described herein and obtained by the methods described herein.

In a further aspect, the invention provides a stand-up pouch comprising the multilayer film or the laminate as described herein.

In other aspects, the invention provides use of the multilayer polyethylene film described herein as a shrink wrap film, as well as use of the multilayer polyethylene film or the laminate described herein for packaging food.

It is noted that the invention relates to all possible combinations of features recited in the claims.

### Brief description of the drawings

Fig. 1 is a schematic side view of a multilayer film according to embodiments of the present invention
Fig. 2 is a schematic side view of a laminate according to embodiments of the present invention.
Fig. 3 is a schematic perspective view of a multilayer film and a base film intended to form a laminate according to embodiments of the present invention.
Fig. 4 is a flow chart illustrating a process for producing a multilayer film according to the invention.
Fig. 5 is a flow chart illustrating a method of producing a laminate according to embodiments of the invention.

As illustrated in the figures, the sizes of layers and regions may be exaggerated for illustrative purposes and, thus, are provided to illustrate the general structures of embodiments of the present invention. Like reference numerals refer to like elements throughout.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

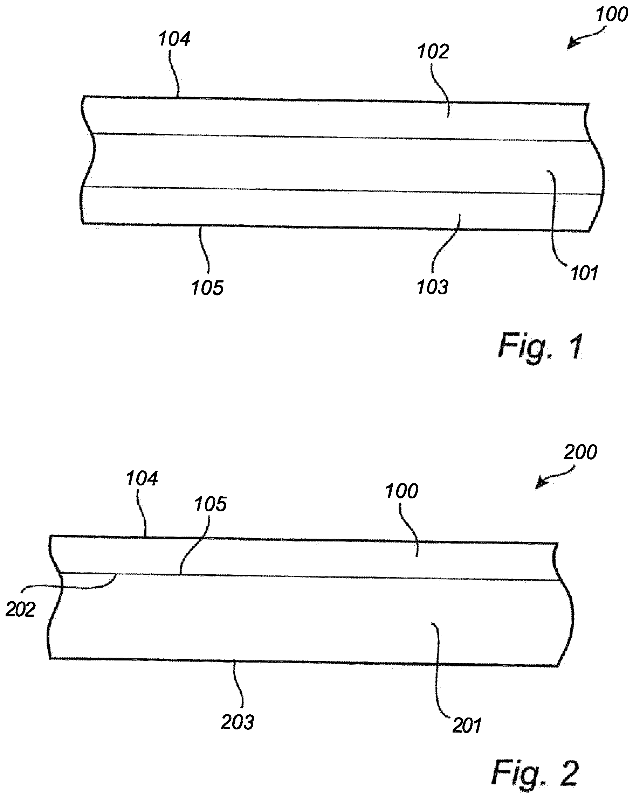

Fig.1 illustrates a multilayer film according to embodiments of the invention. The multilayer film 100 comprises a core layer 101 arranged between a first outer layer, or skin layer, 102, and a second outer layer or skin layer 103. The first outer layer 102 forms a first surface 104 of the multilayer film. The second outer layer 103 forms a second surface 105 of the multilayer film, opposite and facing away from said first surface 104. All of the layers 101, 102, 103 are based on polyethylene, with no or negligible amounts of other polymers such as other polyolefins, polyamide or polyesters. The core layer may comprise up to 100 % of polyethylene.

It is envisaged that the multilayer film may comprise further layers, for instance multiple core layers, provided that any such layers are likewise based polyethylene, with no or negligible amounts of other polymers.

The multilayer film is generally based on polyethylene of relatively low density, such as 936 kg/m³ or less, but at least one layer of the multilayer film comprises HDPE, typically at least 5 % by weight of HDPE based on the weight of the layer in question.

In embodiments, the core layer 101 may comprise 50-90 % by weight of linear low density polyethylene, LLDPE, based on the weight of the core layer. In embodiments, the core layer 101, or a plurality of core layers in total, may comprise 70-85 % by weight of LLDPE, for example 75-80 % by weight of LLDPE. The core layer may optionally comprise LDPE, at a content of from 0 to 50 %, such as from 10 to 40 %. The core layer 101 furthermore comprises 0-25 % by weight of high density polyethylene, HDPE based on the weight of the core layer. In some embodiments, the core layer may comprise 5-20 % by weight of HDPE, for instance about 20 % by weight.

The outer layers 102, 103 may have the same or different compositions. In embodiments, both outer layers 102, 103 may comprise 70-100 % by weight of polyethylene having a density of at most 936 kg/m³ and may optionally include both LLDPE and LDPE. For example, the outer layer 102 and/or the outer layer 103 may comprise 50-90 %, such as 75-80 % by weight of LLDPE and 15-40 %, such as about 20 % by weight of LDPE, based on the weight of the respective layer. Furthermore, in embodiments, at least one of the outer layers 102, 103, optionally both, may comprise HDPE at a content of 5-25 % by weight, such as 5-15 % by weight, for example about 10 % by weight of each outer layer.

In embodiments, the core layer 101 comprises HDPE at a content as indicated above, whereas the outer layers do not contain any HDPE. In other embodiments, the core layer does not comprise any HDPE, while at least one of the outer layers, and preferably both, comprise at least some HDPE, at a content as indicated above.

One or more of the layers of the multilayer film 100 may additionally contain one or more additives to provide a desired functionality to the film, such as slip, cling, colour, gas (e.g. oxygen, or water vapour) impermeability, UV resistance, optical clarity, and the like. For example, at least one of the outer layer 102 and the outer layer 103 may contain a slip agent, e.g. at a content of up to 5 % by weight of the layer. In embodiments, at least one of the core layer 101, outer layer 102 and the outer layer 103 may contain 3-5 % by weight of slip additive. An example of a suitable slip agents is erucamide ((Z)-docos-13-enamide) but other slip agents are known of persons of skill in the art. Other additives conventionally used in polyethylene films or packaging films, such as anti-fog, anti-stat and/or anti-block additives, as well as pigments or dyes, may also be used, if desired.

In embodiments, at least one of the core layer 101, the outer layer 102 and the outer layer 103 may contain a gas barrier additive, such as an agent reducing the oxygen permeability of the layer. In particular, a gas barrier additive may be present in the core layer. An exemplary barrier additive is a dicyclopentadiene hydrocarbon resin, e.g. as disclosed in WO 2018/060345.

Slip agents, barrier agents and other additives may be provided in the form of a polyethylene-based masterbatch, typically an LDPE-based masterbatch. The content of such additives is usually given as % by weight of the additive masterbatch added to the base polymer(s), in this case polyethylene(s).

The outer layers 102, 103, as well as the core layer 101, may be free from (i.e., do not contain) additives or other components that may increase film porosity upon stretching of the film. Such additives or components include particulate material such as mineral fillers and pigments, such as calcium carbonate or titanium dioxide particles.

The multilayer film may have a total film thickness in the range of from 10 to 60 µm, for example from 15 to 50 µm, such as from 20 to 50 µm. Typically, the core layer(s) may be thicker than an individual outer layer. In embodiments, the core layer, or in the case of multiple core layers, all core layers together may have a thickness that exceeds the total thickness of the two outer layers combined. For example, the core layer 101 may constitute from 30 to 60% of the total weight of the film, such as about 50 %.

The multilayer film 100 may be produced by co-extrusion on a cast film line, as described in more detail below. After extrusion, the multilayer film is stretched in a machine-direction orientation unit (MDO) by at least 50 and up to 300% of its original length to provide a stretched cast multilayer film.

The film of the present invention provides a monomaterial film with excellent properties for use in various packaging applications. The film may exhibit high clarity, such as a clarity of at least 95 %, such as from 95 % to 100%, or from 95 % to 99 %, such as at least 96 %, such as in the range of from 96 to 98 %, as determined by ASTM D 1003. The film may exhibit a haze value of 5 % or less, or in the range of from 0 % to 5 %, such as 4 % or less, as determined by ASTM D 1003. The optical properties of the multilayer film make it particularly suitable for use in packaging applications which the packaged product is intended to be visible. The film may also be suitable for heat lamination and is advantageously used in laminates based on polyethylene for packaging and other applications. The present multilayer film may replace films containing non-polyethylene materials, such as polypropylene- or polyester-containing films, in such laminates and other products. Hence, by the present multilayer film, a monomaterial laminate can be provided, which can be easily recycled.

Fig. 2 illustrates a laminate 200 according to embodiments of the invention, comprising a polyethylene base film 201 having a first surface 202 and a second surface 203. When used for packaging applications, surface 203 is intended to face the interior of the packaging, i.e., the product packaged, and surface 202 is intended to face towards the exterior. A multilayer film 100 as described herein e.g. with reference to Fig. 1 can be attached, for instance by heat lamination, hot melt glue lamination, ultrasound high frequency bonding, or two-component glue, to the surface 202 of the base film 201. In fig. 2, the multilayer film 100 is arranged such that the surface 105 faces surface 105 of the base film 201, although it is envisaged that in other embodiments the film 100 may be arranged with the opposite side, surface 104, facing the base film 201. The desired orientation of the multilayer film would depend on the properties of the respective outer layers 102, 103, as appreciated by a person of skill in the art. For instance, where only one of the outer layers 102, 103 contain a slip agent, such layer would be arranged to face away from the base film 201.

The base film 201 of the laminate 200 is typically a polyethylene film. The base film may optionally be a multilayer film. The base film 201 is adapted for or suited for lamination and typically has good properties for welding, such as high hot tack, and/or allows welding at low temperature.

The multilayer film 100 may typically be stiffer than the base film of the laminate, i.e. have a Young's modulus that is higher than the Young's modulus of the base film 201.

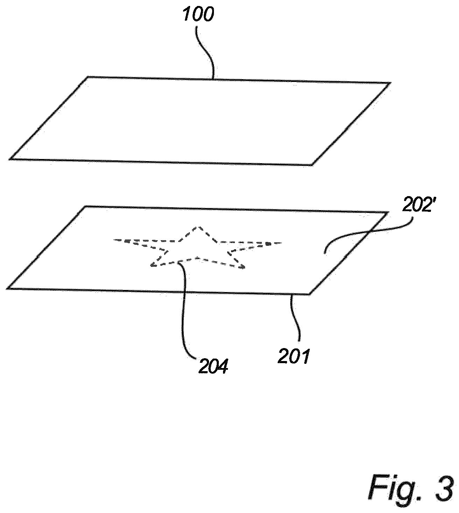

The base film may be printed on at least one of its surfaces, typically the surface 202 which is intended to face outwards when the laminate 200 is used as a packaging. Figure 3 illustrates a perspective view of the base film 201 and the multilayer film 100 prior to lamination thereof. The base film 201 has on its surface 202' a print 204, which is a printed black or coloured pattern, and may form an image and/or text item(s). The multilayer film 100 is to be arranged on the base film 201, with the surface 105 (shown in Fig. 1, 2) facing the surface 202' of the base film 201 to cover the print 204.

The multilayer film described herein may be useful in various packaging applications, for instance as a packaging for hygiene/sanitary products or tissue paper, including rolls of sanitary paper or household paper and articles for mailing, such as magazines and the like. The multilayer film may also be useful in shrink film packaging, stand-up pouches and food packaging. For certain applications, e.g. stand-up pouches and food packaging, the multilayer film may be laminated to a base film as described herein, which may optionally be a barrier film, to form a laminate.

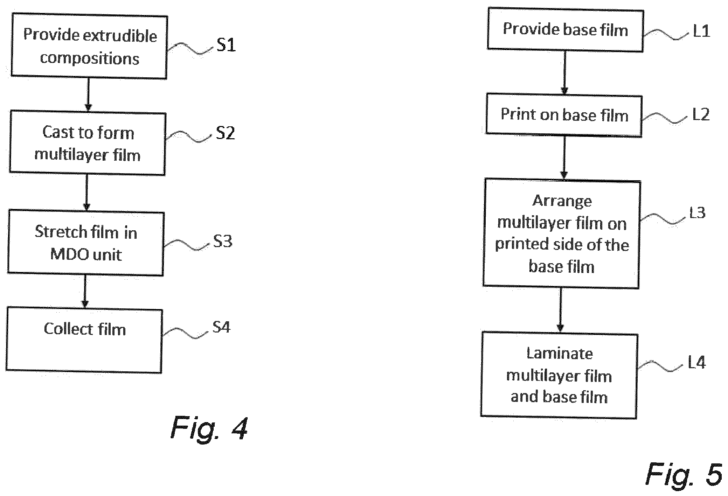

The multilayer film according to the invention is manufactured by cast film extrusion. An exemplary process flow chart is represented in Figure 4. In a first step S1, extrudible compositions A, B and C intended to form the different layers of the multilayer film are provided. In embodiments, composition A may have the composition described above for the core layer, and composition B and/or C may have the composition described above for either of the outer layers. In embodiments where the outer layers should have the same compositions, two of the extrudible compositions, e.g. B and C, may be the same. The core layer of the multilayer film, and thus the first extrudible composition A intended to form the core layer, may comprise LLDPE, and optionally also HDPE and/or LDPE. At least one of the outer layers, and optionally both of the first outer layer and the second outer layer, may comprise LDPE, LLDPE, and optionally HDPE. In embodiments where the core layer (the first extrudable composition) does not comprise HDPE, at least one of the outer layers (corresponding to extrudable compositions B and C), and optionally both, would comprise HDPE. Conversely, in embodiments where neither of the outer layers comprises HDPE, the core layer typically comprises HDPE.

To provide the extrudible compositions the ingredients of each composition are heated and blended to form a homogeneous composition. Next, in step S2, the extrudible compositions A, B and C are coextruded through an extrusion die onto at least one chill roller to form a multilayer film. The film is guided optionally via further guide roller to a machine direction orientation (MDO) unit. In the MDO unit, the step S3 of stretching the film is carried out. The MDO unit typically comprises one or more heated rollers, each having a temperature in the range of 70-100°C, over which the film is passed (step S3a) to obtain a temperature suitable for stretching, after which the film is stretched (step S3b) by means of heated rollers running at different velocities. The film may be stretched by at least 50 % of its original length, for example from 50 to 500 %, such as from 50 to 300 %, or about 100 %. The degree of stretching is intended to mean the difference in speed, in percent, between the stretching rollers in the MDO unit. The difference in speed corresponds to the elongation of the film between the stretching rollers. During the stretching operation, the thickness of the film is reduced. Stretching in the MDO unit may be performed in one step, or alternatively in two or more steps, each stretching step providing a stretch of e.g. 5-300 % relative to the length of the film prior to the step in question. For example, in a first step, the film may be stretched at least 5 %, such as 5-50 %. In a second step the film may be stretched at least 50 %, such as 50-100 %. The film may be cooled after each step and reheated to a temperature of at least 50°C, such as 50-70°C prior to a further stretching step. The film may be relaxed in between stretching steps.

After leaving the MDO unit, the film may be cooled (step S4), e.g. to a temperature of 20-30°C, and is finally collected (step S5), optionally under tension (i.e. without full relaxation), typically by winding to form a film roll.

Figure 5 is a flow chart illustrating a method of producing a printed packaging laminate using the multilayer film as described above or produced by a method as described above. In a first step L1, a base film as described above is provided. The base film may be a polyethylene base film. In a second step L2, the print is applied on the surface of the base film by a printing process, e.g. a conventional process for printing on packaging films such as polyethylene films. Next, in a third step L3, a multilayer film as described above is applied on the printed surface of the base film to cover the print, which is thus sandwiched between the base film and the multilayer film. However, due to the transparency of the multilayer film, the print may still be clearly visible through the multilayer film. In a subsequent step L4, the arrangement of the base film and the multilayer film is laminated to form a permanent attachment between the films.

The linear low density polyethylene (LLDPE) used may comprise an ethylene/α-olefin copolymer comprising at least 60 %, at least 70 %, at least 80 %, or at least 90 % by weight of the units derived from ethylene, and less than 30 %, for example, less than 25 %, or less than 20 %, or less than 10 %, by weight of units derived from one or more α-olefin comonomers. The comonomer may in particular be hexene or octene.

In embodiments the LLDPE may be bimodal LLDPE. Advantageously, bimodal LLDPE may improve mechanical performance of the film, in particular strength and/or tear resistance.

The LLDPE may have a density in the range of from 925 to 936 kg/m³. The melt index (MI) may be in the range of from 2 to 4 g/10min, such as from 2.5 to 4 g/10min (2.16 kg, 190 °C) according to ASTM D1238.

The low density polyethylene (LDPE) used in the multilayer film may have a density in the range of from 920 to 925 kg/m³. The melt index of the LDPE may be in the range of from 2 to 3 g/10min, such as from 2 to 2.5 g/10min (2.16 kg, 190 °C) according to ASTM D1238.

The high density polyethylene (HDPE) used in the multilayer film may have a melt index in the range of from 7 to 15 g/10min, such as from 8 to 12 g/10min (2.16 kg, 190 °C) according to ASTM D1238. The HDPE may have a density of at least 940 kg/m³, such as in the range of from 945 to 965 kg/m³, such as from 955 to 965 kg/m³.

The core layer of the multilayer film, and the first extrudible composition A when intended to form the core layer, may have a total density in the range of from 925 to 940 kg/m³, such as from 925 to 935 kg/m³.

At least one of the outer layers, and optionally both outer layers, comprising LDPE, LLDPE and optionally HDPE, may have a total density in the range of from 925 to 940 kg/m³.

By the term "mechanical performance" is herein mainly meant the mechanical strength of the material, measured in terms of at least one of tensile strength, elastic modulus, tear strength and puncture resistance. Tensile strength, measured as force per unit area, is defined as the maximum stress that a material can withstand while being stretched or pulled before failing or breaking. Young's modulus (E modulus) refers to the tensile elasticity of a material as defined by the ratio of tensile stress to tensile strain applied. Tear strength, typically measured as force per unit length, is defined as the resistance of a material to the growth of e.g. a cut when under tension. Elongation at break is defined as the ultimate elongation (given as percentage of the initial length) of a material before it breaks under tension. Puncture resistance, typically measured as mass per unit length, is defined as the relative ability of a material to withstand a falling dart without breaking.

### Examples

### Example 1

A stretched polyethylene film was produced as follows: Extrudible composition A was obtained by blending LLDPE, HDPE and slip agent in weight contents as indicated in Table 1. Extrudible composition B was obtained by blending LLDPE, LDPE and slip agent (2 % Erucamide), in weight contents (based on the weight of each composition) as indicated in Table 1.

**Table 1.**

| | LLDPE¹⁾ | LDPE²⁾ | HDPE³⁾ | Slip agent |
|---|---|---|---|---|
| Composition A | 76 % | - | 20 % | 4 % |
| Composition B | 76 % | 20 % | - | 4 % |

| | | | | |
|---|---|---|---|---|
| ¹⁾ Melt index: 2-3 g/10min, density: 936 kg/m³ ²⁾ Melt index: 2-2.5 g/10min, density: 920-925 kg/m³ ³⁾ Melt index: 8-12 g/10min, density: 960-965 kg/m³ | | | | |

Melted compositions A and B were co-extruded to form a cast extruded three-layer film whereby composition A formed the core layer and composition B formed the outer layers, respectively. The film was passed to an MDO unit with heated stretching rollers having a temperature of 70-100°C to stretch the film in two steps to a final stretching degree of 40 %.

The film had a final thickness of 25 µm after stretching and had excellent optical properties (haze < 5% and clarity > 96 % according to ASTM D 1003).

The film of example 1 is useful as a packaging film, in particular for packaging of tissue paper, such as rolls of sanitary paper or household paper.

### Example 2

A stretched polyethylene film was produced as follows: Extrudible composition A was obtained by blending LLDPE and HDPE in weight contents as indicated in Table 2. Extrudible composition B was obtained by blending LLDPE and LDPE in weight contents (based on the weight of each composition) as indicated in Table 2.

**Table 2**

| | LLDPE¹⁾ | LDPE²⁾ | HDPE³⁾ |
|---|---|---|---|
| Composition A | 80 % | - | 20 % |
| Composition B | 80 % | 20 % | - |

| | | | |
|---|---|---|---|
| ¹⁾ Melt index: 2-3 g/10min, density: 936 kg/m³ ²⁾ Melt index: 2-2.5 g/10min, density: 920-925 kg/m³ ³⁾ Melt index: 8-12 g/10min, density: 960-965 kg/m³ | | | |

Composition A and composition B were co-extruded to form a cast extruded three-layer film whereby composition A formed the core layer and composition B the outer layers, respectively. The film was passed to an MDO unit with heated stretching rollers having a temperature of 70-100°C to stretch the film in two steps to a final stretching degree of 50 %.

The film had a final thickness of 30 µm after stretching and had excellent optical properties (haze < 5% and clarity > 96 % according to ASTM D 1003).

The film of Example 2 is useful in particular for lamination to a polyethylene base film, such as a printed polyethylene base film.

### Example 3

A stretched polyethylene film was produced as follows: Extrudible composition A was obtained by blending LLDPE and HDPE in weight contents as indicated in Table 2. Extrudible composition B was obtained by blending LLDPE, LDPE and a polymer processing aid (PPA) in weight contents (based on the weight of each composition) as indicated in Table 3.

**Table 3**

| | LLDPE¹⁾ | LDPE²⁾ | HDPE³⁾ | PPA |
|---|---|---|---|---|
| Composition A | 60 % | 40 % | - | - |
| Composition B | 50 % | 38.5 % | 10 % | 1.5 % |

| | | | | |
|---|---|---|---|---|
| ¹⁾ Density: 932-937 kg/m³ ²⁾ Density: 920-925 kg/m³ ³⁾ Density: 955-963 kg/m³ | | | | |

Composition A and composition B were co-extruded to form a cast extruded three-layer film whereby composition A formed the core layer and composition B the outer layers, respectively. The film was passed to an MDO unit with heated stretching rollers having a temperature of 70-100°C to stretch the film in two steps to a final stretching degree of 70 %.

The film had a final thickness of 30 µm after stretching and had excellent optical properties (haze < 5% and clarity > 96 % according to ASTM D 1003). The film of example 3 is useful as a packaging film, in particular for forming a packaging laminate.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A process for producing a polyethylene-based multilayer film, comprising
i) providing (S1) a first extrudible composition A, a second extrudible composition B and optionally a third extrudible composition C, wherein: the first extrudible composition A comprises from 50 to 90 % by weight of linear low density polyethylene (LLDPE) and from 0 to 25 % by weight of high density polyethylene (HDPE); and the second extrudible composition B comprises from 50 to 90 % by weight of LLDPE, 20-40 % by weight of low density polyethylene (LDPE), and from 0 to 25 % by weight of HDPE; wherein at least one of said first extrudible composition A and said second extrudible composition B comprises HDPE; and wherein the extrudible compositions A and B, and if present C, are essentially composed of polyethylene;
ii) cast extruding (S2) the first extrudible composition, the second extrudible composition and optionally the third extrudible composition to form a multilayer cast film wherein said first extrudible composition forms a core layer (101) arranged between a first outer layer (102) formed by the second extrudible composition and a second outer layer (103) formed by either the second extrudible composition or the optional third extrudible composition C;
iii) stretching (S3) said multilayer cast film using a machine-direction orientation (MDO) unit; and
vi) collecting (S4) said film.

2. The process of claim 1, wherein the film is stretched by 50-500 % of its original length, preferably by 50-300 %.

3. The process of claim 1 or 2, wherein the first, second and third extrudible compositions are free of mineral fillers and particulate material.

4. The process of any one of the claims 1 to 3, wherein the extrudible composition A comprises from 10 to 20 % by weight of HDPE.

5. The process of any one of the claims 1 to 4, wherein the extrudible composition B comprises from 5 to 20 % by weight of HDPE.

6. The process of any one of the claims 1 to 5, wherein the third extrudible composition C is provided , extrudible composition C comprising from 50 to 90 % by weight of LLDPE, from 20 to 40 % by weight of LDPE and from 0 to 25 % by weight of HDPE, wherein the third extrudible composition C optionally is the same as the second extrudible composition B.

7. A multilayer polyethylene film (100) having a machine direction degree of stretching of from 50 % to 300 % and comprising a core layer (101) arranged between a first outer layer (102) and a second outer layer (103), the core layer comprising a polyethylene blend of from 50 to 90 % by weight of linear low density polyethylene (LLDPE) and from 0 to 25 % by weight of high density polyethylene (HDPE), the first outer layer comprising a blend of from 50 to 90 % by weight of LLDPE, from 20 to 40 % by weight of low density polyethylene (LDPE) and from 0 to 25 % of HDPE; and the second outer layer comprising a blend of from 50 to 90 % by weight of LLDPE, from 20 to 40 % by weight of LDPE and from 0 to 25 % of HDPE, wherein at least one of the core layer, the first outer layer and the second outer layer comprises HDPE, wherein the second outer layer optionally has the same composition as the first outer layer, and wherein the multilayer film is essentially composed of polyethylene.

8. The multilayer film of claim 7, wherein the film has a melt index in the range of from 2 to 3.5 g/10 min as determined by ASTM D1238 at 2.16 kg 190°C.

9. The multilayer film of claim 7 or 8, wherein at least one layer, such as the core layer, comprises a gas barrier additive.

10. The multilayer film of any one of the claims 7 to 9, wherein at least one of the first outer layer and the second outer layer comprises a slip agent.

11. A laminate (200) comprising the multilayer polyethylene film of any one of the claims 7 to 9 laminated to a first surface (202, 202') of a polyethylene base film (201).

12. A method of producing the laminate of claim 11, comprising
a) providing a polyethylene base film (201) haing a first surface (202, 202') and a second surface (203),
b) providing the multilayer polyethylene film according to any one of the claims 7 to 9, and
c) laminating said polyethylene multilayer film to said first surface of the polyethylene base film.

13. The method of claim 12, wherein the first surface (202') of the polyethylene base film is printed, and step a) optionally comprises a-i) providing a polyethylene base film haing a first surface and a second surface, and a-ii) providing a printed pattern (204) on said first surface of the polyethylene base film.

14. A packaging material comprising the laminate according to claim 11 or as produced by the method of claim 12 or 13.

15. Use of the multilayer polyethylene film according to any one of the claims 7 to 10 as a shrink wrap film.
